Europäisches Patentamt

European Patent Office

Office européen des brevets

(19)

(11) Veröffentlichungsnummer: **0 022 467**
**A1**

(12) **EUROPÄISCHE PATENTANMELDUNG**

(21) Anmeldenummer: **80103019.8**

(22) Anmeldetag: **30.05.80**

(51) Int. Cl.³: **F 16 D 3/72, B 29 D 23/00**

(30) Priorität: **11.07.79 DE 2927955**

(43) Veröffentlichungstag der Anmeldung: **21.01.81**
**Patentblatt 81/3**

(84) Benannte Vertragsstaaten: **AT BE CH FR GB IT LI LU NL SE**

(71) Anmelder: **Messerschmitt-Bölkow-Blohm Gesellschaft mit beschränkter Haftung, Postfach 801109, D-8000 München 80 (DE)**

(72) Erfinder: **Thomamüller, Dieter, Blumenstrasse 11 1/2, D-8206 Bruckmühl (DE)**
Erfinder: **Brunsch, Klaus, Dipl.-Ing., Asternweg 11, D-8190 Wolfratshausen (DE)**

(54) Verfahren zur Herstellung einer Antriebswelle und Antriebswelle gemäss dem Verfahren.

(57) Verfahren zur Herstellung einer zur Kupplung von zwei unterschiedlichen Übertragungselementen dienenden Antriebswelle aus Faserverbundwerkstoff, dessen Fasern mit einem Fadenwinkel von etwa ± 45° zur Mittelachse des Bauteils gewickelt sind, wobei

a) auf einem Teil (12) eines Wickeldorns (11) ein in Form und Abmaßen des gewünschten Kupplungselementes entsprechender Kern (13) und daran anschließend eine den geforderten Übertragungselementen entsprechende Hülse (14) positioniert werden,

b) der Wickelvorgang in an sich bekannter Weise mit einer Faserwinkelablage von ± 45° vollzogen wird,

c) mittels eines Preßwerkzeuges (16) die Wicklungshülse (19) und/oder das Laminat (18) samt der Hülse (14) und dem Kern (13) in Achsrichtung (R$_v$) zusammengefahren und einem Härtezyklus unterworfen werden.

Verfahren zur Herstellung einer Antriebswelle

Die Erfindung bezieht sich auf ein Verfahren zur Herstellung einer zur Kupplung von zwei unterschiedlichen Übertragungselementen dienenden Antriebswelle aus Faserverbundwerkstoff, dessen Fasern mit einem Fadenwinkel von etwa $\pm$ 45° zur Mittelachse des Bauteils gewickelt sind, und aus einer nach diesem Verfahren hergestellten Antriebswelle.

Bei der Übertragung von Antriebsdrehmomenten über größere Strecken durch eine Anordnung von Wellen ist es notwendig, Elemente in dieses Wellensystem zu integrieren, die einen Ausgleich von Winkel- und Längenänderungen erlauben. Dies geschieht bisher im allgemeinen durch die Verwendung von sogenannten Bendix-Lamellen-, Hardy-Kupplungen und dergleichen. Hierfür gibt es eine große Anzahl von Vorschlägen, die aber alle den Nachteil haben, daß sie einmal einen Aufwand an Einzelbauteilen erfordern und zum andern nicht wartungsfrei sind. Die Befestigungselemente müssen laufend kontrolliert werden. Als Kupplungselement zur torsionssteifen Verbindung zweier nicht genau fluchtender Wellen sind je nach dem Auftreten der angreifenden Kräfte spezielle Sonderanfertigungen und -ausgestaltungen des Kupplungselementes erforderlich, wie beispielsweise die DE-OS 24 22 181 am Beispiel eines Kupplungsbalges zeigt, oder die DE-OS 24 35 450 am Beispiel von radial geschlitzten Rundkörpern als Kupplungselemente. Abgesehen vom Bauteilaufwand weisen die meisten der zum Stand der Technik zählenden Ausführungsformen auch ein erhebliches Gewicht auf.

Um dieses Gewicht zu vermindern, wurde nun in der DE-OS 22 37 775 vorgeschlagen, ein kraftübertragendes Bauteil zur Beanspruchung auf Zug, Druck und/oder Torsion aus Faserverbundwerkstoff mit einem Fadenwinkel von $\pm$ 45° zur Mittelachse

-4-

- 2 -

des Bauteils zu wickeln. Die hier vorgeschlagene Bauteilausführung ist jedoch nur ganz speziell einsetzbar bzw. verwendbar.

Der vorliegenden Erfindung liegt die Aufgabe zugrunde, ein
Verfahren zu schaffen, mit dem es möglich ist, ein multifunktionelles Bauteil zur Übertragung von Antriebsdrehmomenten herzustellen, das nicht nur den Aufwand an Einzelbauteilen ganz wesentlich reduziert, sondern auch Bauteile schafft, die ohne
Minderung der Festigkeitswerte eine Gewichtsersparnis erbringen.

Diese Aufgabe wird durch die in den Ansprüchen niedergelegten
Maßnahmen in einfacher und zuverlässiger Weise gelöst. Die Erfindung ist an Ausführungsbeispielen in der Beschreibung erläutert und in der Zeichnung schematisch dargestellt. Es zeigen:

Fig. 1    eine schematische Darstellung der 1.Phase des erfin-
          dungsgemäßen Verfahrens, nämlich den Beginn des Wickelvorganges;

Fig. 2    eine schematische Darstellung der 2.Phase, nämlich
          den Zustand nach Beendigung des Wickelvorganges;

Fig. 3    eine schematische Darstellung der 3.Verfahrensphase,
          nämlich den Verschiebe- bzw. Preßvorgang vor dem Aushärteprozeß;

Fig. 4    eine schematische Darstellung der 4.Phase, nämlich das
          entformte und fertiggestellte Bauteil mit seinen ein-
          zelnen Funktions- bzw. Wirkungsmöglichkeiten;

Fig. 5    einen Teilschnitt eines weiteren Ausführungsbeispiels
          der Antriebswelle.

-5-

- 3 -

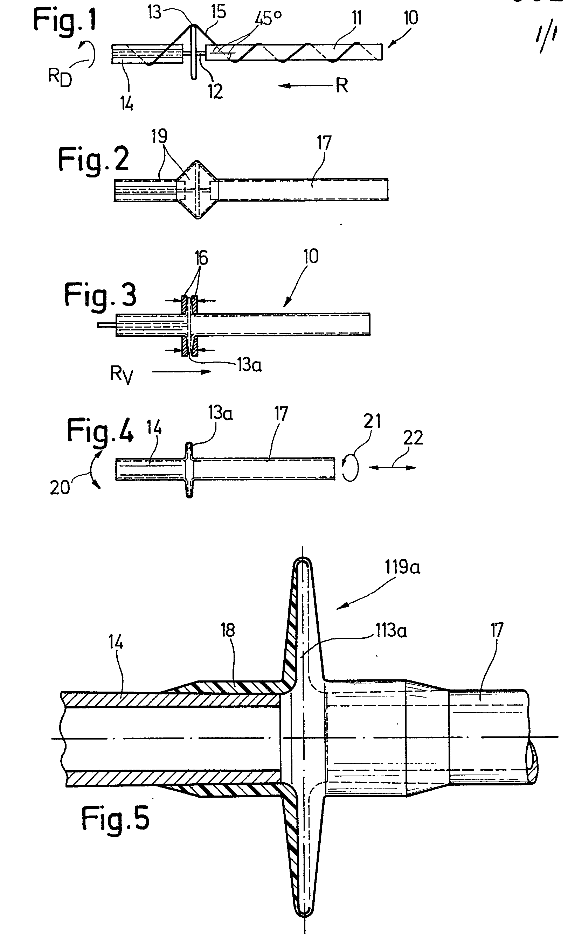

Das vorgeschlagene Verfahren zur Herstellung einer Antriebswelle für die Übertragung von Drehmomenten über größere
Strecken ist in den Fig. 1 bis 4 zeichnerisch dargestellt.
Generell wird bei diesem Verfahren die sich durch das
Wickeln der $\pm$ 45°-Lagen, die eine Übertragung großer Drehmomente erlauben, ergebende geringe Steifigkeit im Scheibenbereich genutzt, Verformungen des Antriebssystems in Längsachsrichtung der Welle sowie Winkeländerungen der Drehachse
zuzulassen. Hierzu tragen auch die anisotropen Eigenschaften
des Werkstoffverbundes bei, aber auch die sich im Scheibenbereich ergebende Abnahme der Wandstärke des Kupplungselementes. Durch die annähernd konstante $\pm$ 45°-Ablage der Fasern,
die auch im Kupplungsbereich bleibt, wird eine hohe Torsionsfestigkeit erhalten. Gleichzeitig gewährleistet diese Winkelablage eine aufwandslose Zentrierung der beiden Wellenmittelachsen.

Das vorgeschlagene Verfahren zur Fertigung des konzipierten
Bauteils 1o wird also in Wickeltechnik durchgeführt. In der
1.Phase des Verfahrens wird eine z.B. sechskantige Hülse 14
auf eine dünne Welle 12 eines Wickeldorns 11 geschoben, nachdem vorher ein z.B. aus auflösbarem Material bestehender
Kupplungskern 13 auf die dünne Welle 12 aufgeschoben wurde.
Hülse 14, Kern 13 und Wickeldorn 11 - letzterer mit seiner
Stirnfläche am Absatz zur dünnen Welle 12 - befinden sich
dabei in bestimmten Abständen zueinander. Diese Abstände
können beispielsweise durch Abstandshalter aus auflösbarem
Material fixiert werden. Nach dieser Positionierung werden
nun in der bereits erwähnten $\pm$ 45°-Ablage die mit Kunststoff
getränkten Fasern aus z.B. Glas, Kohlenstoff oder Kunststoff
über den Wickeldorn 11, den Kupplungskern 13 und die Sechskanthülse 14 gewickelt, wobei die fertige Wickelhülse 19 entsteht.

-6-

- 4 -

In der 2. Verfahrensphase - nach Beendigung des Wickelvorganges - wird die Verbindung zwischen der Hülse 14 und der Welle 12 des Wickeldorns 11 gelöst.

In der 3. Phase nun wird mittels eines Preßwerkzeuges 16 das entstandene Verbundlaminat mit der Hülse 14 und dem Kern 13 in Verschieberichtung $R_V$ zusammengepreßt und einem Aushärtezyklus unterworfen.

In der 4. Phase des Verfahrens - also nach dem Aushärtezyklus - wird das Bauteil aus dem Preßwerkzeug genommen und entformt, d.h. der Wickeldorn mit der dünnen Welle wird aus der entstandenen Faserverbund-Wellenhülse 17 gezogen. Nunmehr können der Kern 13 und gegebenenfalls die Abstandshülsen aufgelöst bzw. ausgewaschen werden.

In der Fig. 5 wird eine Variante des erfindungsgemäß hergestellten Bauteils gezeigt. Hier sind die Wellen 14 und 17 einzelne Bauteile, die aus Metall, aber auch Kunststoff oder Verbundwerkstoff sein können, mit einem Kernelement 113a z.B. durch Kleben miteinander verbunden. Das Kernelement wird zusammen mit den Wellen 14,17 mit einem GFK-Laminat 18 umwickelt. Das entstandene Kupplungselement 119a ist somit mit diesen Wellen integriert. Vorzugsweise werden auch Kupplungselement und Wellen miteinaner verpreßt und anschließend ausgehärtet.

Durch das vorgeschlagene Verfahren werden nun Antriebswellen erhalten, die aus einem integrierten Bauteil bestehen und durch die Werkstoffwahl sowie die Verfahrens- und Ausbildungskonzeption in absolut zuverlässiger Weise einen verschleißfreien Ausgleich von Winkel- und Längenänderungen erlauben, entsprechend den in der Figur 4 eingezeichneten Pfeile 20 bis 22.

MESSERSCHMITT-BÖLKOW-BLOHM
GESELLSCHAFT
mit beschränkter haftung
MÜNCHEN

Ottobrunn, 9.Juli 1979
8540
BT01 Kre/Hi/gö

Verfahren zur Herstellung einer Antriebswelle

P a t e n t a n s p r ü c h e

1. Verfahren zur Herstellung einer zur Kupplung von zwei unterschiedlichen Übertragungselementen dienenden Antriebswelle aus Faserverbundwerkstoff, dessen Fasern mit einem Fadenwinkel von etwa $\pm$ 45° zur Mittelachse des Bauteils gewickelt sind, dadurch g e k e n n z e i c h - n e t , daß

a) auf einem Teil (12) eines Wickeldorns (11) ein in Form und Abmaßen des gewünschten Kupplungselementes entsprechender Kern (13) und daran anschließend eine den geforderten Übertragungselementen entsprechende Hülse (14) positioniert werden,

b) der Wickelvorgang in an sich bekannter Weise mit einer Faserwinkelablage von $\pm$ 45° vollzogen wird,

c) mittels eines Preßwerkzeuges (16) die Wicklungshülse (19)

-2-

und/oder das Laminat (18) samt der Hülse (14) und dem Kern (13) in Achsrichtung ($R_v$) zusammengefahren und einem Härtezyklus unterworfen werden.

2. Verfahren nach Anspruch 1, dadurch g e k e n n z e i c h n e t daß nach Beendigung des Aushärtevorganges das erhaltene Bauteil (1o) entformt und der Kern (13) herausgewaschen wird.

3. Antriebswelle nach dem Verfahren gemäß Anspruch 1, dadurch g e k e n n z e i c h n e t , daß zwischen zwei achsgleichen Wellen (14,17) ein Kupplungselement (13a) angeordnet ist und die drei Bauteile (13a,14,17) miteinander zu einem einzigen unlösbaren Bauelement (1o) integriert sind.

4. Antriebswelle nach Anspruch 3, dadurch g e k e n n z e i c h - n e t , daß die Wellen (14,17) und ein Kupplungselement (113a) mit einem GFK-Laminat (12) in konstanter ± 45°-Faser-Winkelablage umwickelt und zusammengehalten sind.

Fig.1

Fig.2

Fig.3

Fig.4

Fig.5

8540

Europäisches Patentamt

**EUROPÄISCHER RECHERCHENBERICHT**

0022467

Nummer der Anmeldung

EP 80 10 3019

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US – A – 3 970 495 (ASHTON)<br><br>* Das ganze Dokument * <br><br>-- | 1-4 |
| | FR – A – 2 265 656 (HIGH TEMPERA-TURE)<br><br>* Das ganze Dokument *<br><br>-- | 1-4 |
| | FR – A – 1 257 165 (PNEUMATIC ET CAOUTCHOUC)<br><br>* Das ganze Dokument *<br><br>-- | 1,3 |
| A | US – A – 1 569 989 (LEIPERT) | |
| A | US – A – 2 950 609 (GOODLOE) | |
| A | GB – A – 935 754 (DUNLOP RUBBER) | |
| A | GB – A – 389 907 (FRASER) | |
| A | FR – A – 2 343 918 (DASSAULT-BREGET) | |
| A | FR – A – 2 361 588 (FIRME ZIEGEL-WERKE) | |
| A | FR – A – 2 086 592 (AQUITANO-OR-GANICO) | |
| A | FR – A – 1 195 472 (VIRAX)<br><br>------- | |

**KLASSIFIKATION DER ANMELDUNG (Int.Cl. 3)**

F 16 D 3/72
B 29 D 23/00

**RECHERCHIERTE SACHGEBIETE (Int. Cl. 3)**

F 16 D 3/00
F 16 C 7/00
B 29 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-10-1980 | BALDWIN |

EPA form 1503.1  06.78